# EUROPEAN PATENT SPECIFICATION

(11) **EP 1 349 885 B1**
(45) Date of publication and mention of the grant of the patent: **12.03.2008**
(21) Application number: 01992239.2
(22) Date of filing: 09.11.2001
(51) Int. Cl.: C08G 64/16, C08G 65/00, C08F 263/00, C08F 293/00

(54) **FLUORESCENT POLYMERIC ARTICLES FABRICATED FROM U.V. LIGHT ABSORBING POLYMER**
AUS UV-LICHT ABSORBIERENDEM POLYMER HERGESTELLTE FLUORESZENTE POLYMERGEGENSTÄNDE
ARTICLES POLYMERES FLUORESCENTS FABRIQUES A PARTIR D'UN POLYMERE ANTI-UV

(30) Priority: 09.11.2000 US 710510
(43) Date of publication of application: 08.10.2003
(73) Proprietor: AVERY DENNISON CORPORATION, Pasadena, CA 91103 (US)
(72) Inventor: WEI, Guang-Xue, Deerfield, Illinois 60015 (US); BUONI, Drew, J., Chicago, Illinois 60622 (US); LOVERING, Kimberly, A., Lake-in-the-Hills, Illinois 60156 (US)
(74) Representative: Müller-Boré & Partner Patentanwälte
(86) International application number: PCT/US2001/049643
(87) International publication number: WO 2002/038648

(56) References cited:
- EP-A- 0 311 512
- WO-A-02/055570
- WO-A1-00/26275
- US-A- 4 259 458
- US-A- 4 598 130
- US-A- 5 229 208
- US-A- 5 387 458

## Description

### TECHNICAL FIELD

The present invention relates generally to fluorescent retroreflective sheeting material comprising a fluorescent layer comprising one or more fluorescent dyes sensitive to ultraviolet light. More particularly, the invention is directed to U.V. light resistant fluorescent retroreflective sheeting material comprising a fluorescent layer, fabricated from a fluorescent colorant and a polymeric resin comprising a U.V. light absorbing polymer, or a polymer capable of rearrangement to a U.V. light absorbing polymer upon exposure to light. The polymeric sheeting materials comprising a plurality of retroreflective elements, are stabilized against ultraviolet light degradation without need for placement of a separate U.V. screening layer over the article.

### BACKGROUND ART

Retroreflective sheeting is widely used for traffic and roadway safety signs. Such sheeting is typically provided as a polymeric monolayer or multilayer sheeting material having thousands of retroreflective elements, such as microprismatic corner cubes or glass microspheres that reflect incident light. It is well known to incorporate one or more fluorescent dyes into a retroreflective sheeting material in order to enhance the visibility of articles such as road signs manufactured from such sheeting material. Fluorescent colors enhance visual contrast, which makes fluorescent colored materials more conspicuous than nonfluorescent materials. Unfortunately, most fluorescent colorants have poor ultraviolet light stability. In some cases, fading of fluorescent sheeting due to ultraviolet light exposure can occur within six months. The loss of fluorescence caused by ultraviolet light exposure dramatically shortens the useful life of fluorescent traffic and roadway signs. Accordingly, there is a need in the art to stabilize fluorescent colorants in plastics and to find a means to reduce the fading of fluorescent dyes in order to provide retroreflective road signs that can remain in service for significantly longer periods.

To enhance the outdoor durability of fluorescent retroreflective sheeting, an ultraviolet screening layer is often used to protect the base fluorescent polymeric matrix layer from the effects of ultraviolet radiation. Traditionally, the U.V. light screening layer is made by dissolving U.V. light absorbing compounds into a transparent polymer matrix. Japan Kokai No. 2-16042, Application No. 63-165914 (Koshiji) and U.S. Patent 5,387,458 (Pavelka et al.) each disclose fluorescent articles consisting of an ultraviolet light screen layer disposed in front of a fluorescent color layer. According to these references, the screening layer contains substantial amounts of ultraviolet light absorbing compounds, which absorb a defined range of U.V. light (wavelength from 290 to 400 nm).

Such prior art multilayer structures in which a U.V. light absorbent additive-treated screening layer is disposed in front of a layer containing a fluorescent dye can give rise to several difficulties. One problem is that the U.V. light absorbent additives incorporated into the U.V. light screening layer may leach out with time, because most U.V. light absorbing compounds are relatively small molecules and the U.V. light screening layer is typically quite thin. As a result of this phenomenon, the screening layer may lose its protective function, and the fluorescent colorants in the fluorescent layer will quickly fade and lose their fluorescence when exposed to ultraviolet light. A further problem with the U.V. light absorbent additive-treated screening layers is that U.V. light absorbing compounds present therein can diffuse or migrate into the fluorescent layer. If the U.V. light absorbing compound is not carefully selected, this diffusion can actually accelerate the fading of the fluorescent colorant even though the diffused compound is one that absorbs U.V. light. The problem of additive migration requires that a U.V. light absorbing additive incorporated into a screening layer be carefully matched to the fluorescent colorant so as to minimize any tendency of the migrating U.V. absorber to affect the color and fluorescence of the article. The implication that one may randomly select any U.V. absorber capable of blocking most U.V. light below 400 nm wavelength (see, e.g., Japan Kokai No. 2-16042, Application No. 63-165914 (Koshiji et al.) and U.S. Patent No. 5,387,458 (Pavelka et al.)) fails to take into account the potential interaction between the U.V. absorber in the screening layer, and the fluorescent dye(s) present in the colored layer.

WO-A-02/055570 which has the same priority date as the present application, describes fluorescent polymeric articles having a screening layer formed from UV light absorbing polymers and merely relates to a structure wherein a UV light screening layer is disposed in operative screening relation to a layer containing a fluorescent colorant. The light screening layer comprises a polymer having in its backbone repeating units of a UV light absorbing moiety, or a moiety capable of being transformed by photo-Fries rearrangement into a UV light absorbing moiety. EP-A-0 311 512 and US 5,229,208 describe a resin molded body for optical parts comprising a solid solution of a polycarbonate and a polyester carbonate. US 5,387,458 describes an article comprising an ultraviolet screening screen layer and a color layer containing a defined daylight fluorescent dye dissolved in a defined polymeric matrix.

The use of a multi-layer polymeric structure also presents difficulties in manufacturing. Multiple films must be extruded, cast, or purchased, and the individual films must be laminated together, resulting in a more expensive and more time-consuming process. Moreover, technical problems can arise. For example, the different resins in a multi-layer structure must be capable of being bonded to one another. Where the multi-layer article is a retroreflective sheeting structure and the refractive indices of contacting layers are different, the interface between the layers must be delicately controlled and remain optically smooth in order to maximize the retroreflectivity of the resultant articles.

Based on the problems described above, there is a strong need in the art for fluorescent polymeric articles which exhibit improved fluorescence durability against ultraviolet radiation without the need for placement of a separate U.V. light screening layer over the article.

In view of the foregoing, a general object of the present invention is to provide a polymeric article having durable fluorescence in the absence of a separate U.V. light screening layer. Another object of the invention is to provide retroreflective sheeting material having durable fluorescence and being suitable for use in the fabrication of outdoor-weatherable products such as road signs, where the sheeting material is less susceptible to degradation from U.V. light and the rapid loss of fluorescence resulting therefrom.

Yet another object of the invention is to provide a fluorescent polymeric article in which a U.V. light-absorbing polymer, or polymer capable of re-arrangement to a U.V. light absorbing polymer, can provide improved fluorescence stability in comparison to non-U.V. light absorbent polymers treated with U.V. light absorbing additives and/or light stabilizers.

These and other objects will become apparent hereinafter to those skilled in the art.

### DISCLOSURE OF THE INVENTION

The present invention results from our discovery that a sheeting material fabricated from a U.V. light absorbing polymer, and/or a polymer capable of undergoing re-arrangement to a U.V. light absorbing polymer, a fluorescent dye, and optional additives such as U.V. absorbing compounds and hindered amine light stabilizers can provide a surprising degree of durability to the resulting fluorescent color. The level of durability is superior to that afforded when a fluorescent polymeric article is fabricated from a non-U.V. light absorbent polymer treated with conventional U.V. light absorbing additives (e.g., benzophenones and/or benzotriazoles, either with or without hindered amine light stabilizers, and the like). Although U.V. light absorbing resins have been known (e.g., polyarylates), it could not have been predicted that the use of such resins as a host matrix for a fluorescent dye would afford such a surprising degree of fluorescent durability without the use of an additional U.V. light screening layer.

Accordingly, we have found that the objects stated above can be achieved in a fluorescent retroreflective sheeting material comprising a fluorescent layer as defined in claim 1 comprising a fluorescent dye and at least one U.V. light absorbing polymer, or a polymer that can undergo photo-Fries re-arrangement to a U.V. light absorbing polymer and a plurality of retroreflective elements. More particularly the polymeric resin used to fabricate the fluorescent material comprises at least one polymer, or a mixture thereof, selected from the group consisting of:
(i) polymers having a polymeric backbone comprising the following repeating moiety A; 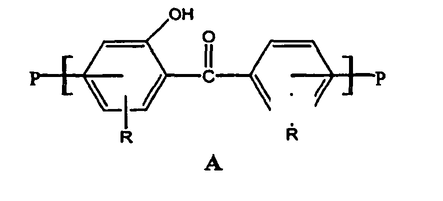 wherein R is a non-interfering substituent and P is the remainder of the polymer, and whereby the polymers are able to absorb ultraviolet light; and
(ii) polymers having a polymeric backbone comprising the following repeating moiety B: 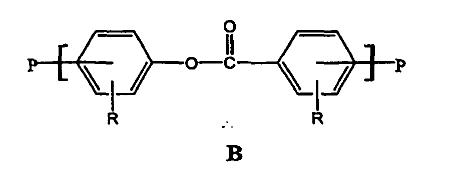
where R is a noninterfering substituent and P is the remainder of the polymer; said moiety B being transformable to said moiety A by photo-Fries rearrangement, whereby said polymers comprising moiety B can undergo rearrangement to ultraviolet-absorbing polymers comprising moiety A;
whereby said fluorescent colorant is stabilized against ultraviolet radiation without placement of a separate U.V. light screening layer over said article.

The term "non-interfering substituent" is intended to denote substituents which do not prevent the above-defined moieties from exhibiting U.V. light absorbent properties, or from undergoing photo-Fries rearrangement to U.V. light absorbing moieties.

The fluorescent retroreflective sheeting material of the present invention may also comprise a mixture of the moiety A and moiety B polymers. Without intending to be bound to any particular theory, the enhanced color and fluorescence durability provided in the articles of the present invention are believed to result, at least in part, from the repeating U.V. light absorbing moieties being present directly in the backbone of the host matrix polymer, as distinguished from separate U.V. light absorbing compounds admixed with polymer.

There is provided a retroreflective sheeting material comprising a fluorescent dye in a polymeric resin matrix comprising polyarylate, and a plurality of retroreflective elements; said fluorescent dye being stabilized at least in part by said polyarylate resin matrix against ultraviolet deterioration in the absence of a separate U.V. light screening layer disposed over the sheeting material.

There is also provided fluorescence-stabilized polymeric retroreflective road sign comprising: a polymeric sheeting material, said sheeting material comprising a fluorescent dye, a polyarylate resin, and a plurality of retroreflective elements, and without a separate U.V. screening layer over the sheeting material.

Preferred polymers for the sheeting material of the present invention include polyarylate, and blends of polyarylate with any one or more of the following: polycarbonate, poly(ethylene terephthalate) ("PET"), poly(cyclohexanedimethanol terephthalate) ("PCT") and/or poly (cyclohexanedimethanol-co-ethylene terephthalate ("PETG"). Although the polyarylate backbone contains a moiety B capable of undergoing photo-Fries rearrangement to a benzophenone-type U.V. light absorbing moiety, the invention is also directed to polymers which have benzophenone-type moieties (see moiety A above) in their polymeric backbone and thus do not require rearrangement to become U.V. light absorbent. Surprisingly, we have found that fluorescent polymeric sheeting materials fabricated from blends of polyarylate with either poly(ethylene terephthalate) or polycarbonate afford greater fluorescence stabilization than such fluorescent polymeric sheeting materials fabricated entirely from polyarylate. We have also discovered that the fluorescent stabilization exhibited by the sheeting materials of the present invention may be enhanced by the addition ofU.V. light absorbing additives such as benzophenones and/or benzotriazoles, either with or without hindered amine light stabilizers (HALS), and preferably a combination of a U.V. light absorbing (e.g., a benzotriazole compound) and HALS.

Numerous advantages are provided by the invention. For example, the U.V. resistant sheeting material of the present invention will provide excellent fluorescence protection to virtually any fluorescent colorant. Another advantage is that problems associated with leaching out or migration of U.V. light absorbing additives are eliminated. The manufacturing difficulties associated with applying a separate U.V. light absorbing screening layer are also eliminated. Yet another advantage of the invention is that in a preferred embodiment in which polyarylate (and preferably a blend thereof with polycarbonate or poly(ethylene terephthalate)) is present as the U.V. light absorbent polymer in the U.V. resistant sheeting material hereof, the sheeting material is afforded a combination of excellent properties important in the fabrication of durable retroreflective sheeting material such as toughness, impact resistance, and chemical resistance.

### BRIEF DESCRIPTION OF DRAWINGS

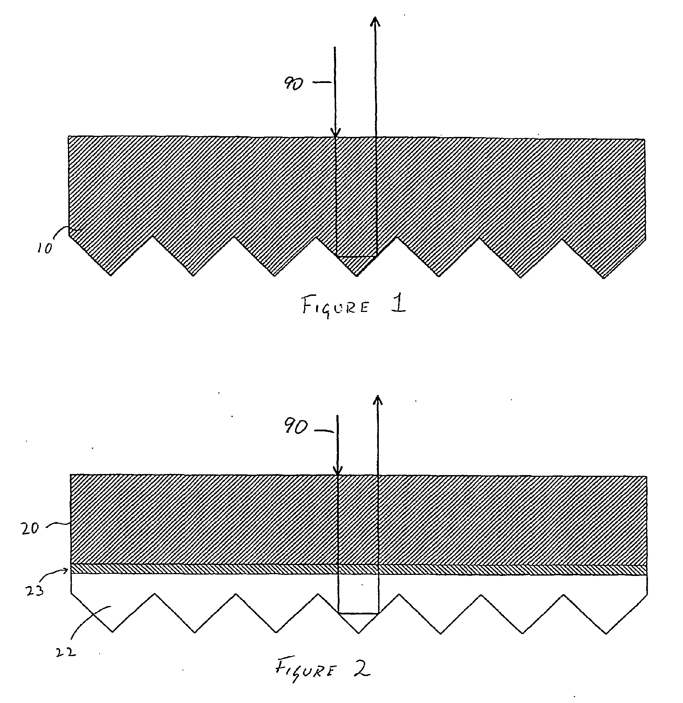

FIG. 1 illustrates a cross-section view of a microprismatic retroreflective sheeting material of the invention comprising a monolayer of a U.V. light absorbing polymer matrix having a fluorescent colorant blended therein, and wherein the retroreflective microprismatic cube corner elements are formed onto a surface of the fluorescent U.V. light absorbing layer.
FIG. 2 illustrates a cross-section view of a microprismatic retroreflective sheeting material of the invention comprising a layer of a U.V. light absorbent polymer matrix having a fluorescent colorant blended therein, a colorless retroreflective layer, and an optional tie layer or adhesive therebetween, and wherein the retroreflective microprismatic cube corner elements are formed onto the colorless layer.

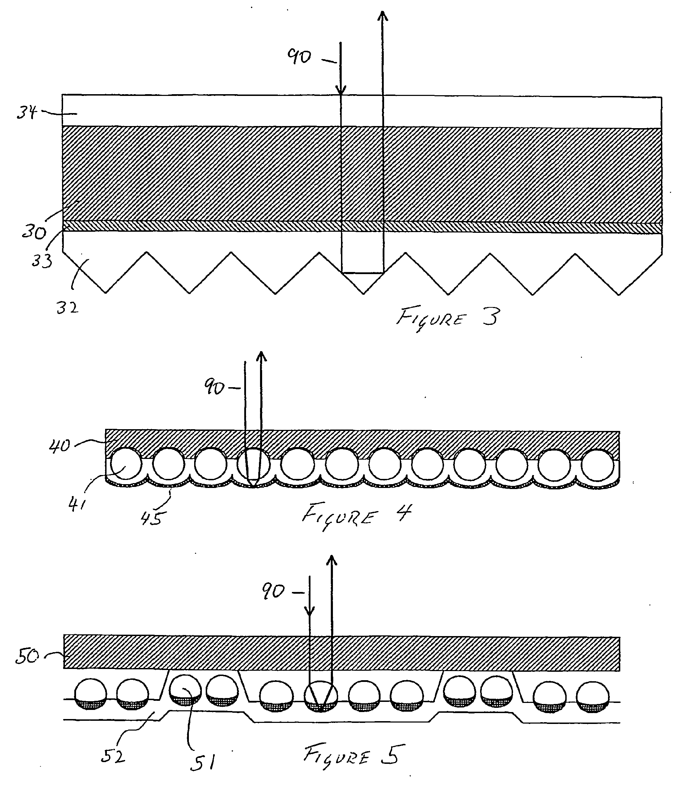

FIG. 3 illustrates a cross-section view of a microprismatic retroreflective sheeting material of the invention comprising a cap or over-laminate layer having desired properties, a layer of a U.V. absorbent polymer matrix having a fluorescent colorant blended therein, a colorless retroreflective layer having microprismatic cube corner elements formed thereon, and an optional tie layer or adhesive between the fluorescent and retroreflective layers.
FIG. 4 illustrates a cross-section view of an enclosed lens retroreflective sheeting material of the invention in which the U.V. light absorbing polymeric matrix having a fluorescent colorant blended therein is disposed over an enclosed lens structure.
FIG. 5 illustrates a cross-section view of an encapsulated lens retroreflective sheeting material of the invention in which the U.V. light absorbing polymeric matrix having a fluorescent colorant blended therein is disposed over an encapsulated lens structure.

### BEST MODE FOR CARRYING OUT THE INVENTION

For purposes of this patent, U.V. light absorbing polymer materials are defined as polymer materials that absorb some quantity of light for at least some wavelengths between about 290-410 nm.

The heart of the invention lies in the use of a U.V. light absorbing polymer, preferably polyarylate, as a component of the polymeric matrix for a sheeting material containing a fluorescent colorant. When exposed to light, polyarylate converts to a polymer having in its backbone hydroxybenzophenone-like moieties which absorb U.V. light. We find that the use of a U.V. light absorbing polymer, such as polyarylate, having U.V. absorbing moieties incorporated in the polymeric backbone, or moieties capable of undergoing photo-Fries rearrangement in situ to U.V. light absorbent moieties, provides much better and longer U.V. protection than that afforded by merely adding conventional U.V. additives such as hydroxybenzophenones to a non-U.V. absorbent polymer. This is quite surprising insofar as the U.V. light absorbing moieties that form segments of the backbone of the polymers used in the invention (hydroxybenzophenone-type moieties, see moiety A, above) are similar to those present in conventional benzophenone U.V. light absorbing additives of the prior art.

In somewhat greater detail, the polymer suitable for fabricating the U.V. light resistant fluorescent sheeting material can comprise any polymer in which the polymeric backbone either comprises the repeating ultraviolet light absorbing o-hydroxybenzophenone moiety A, below: 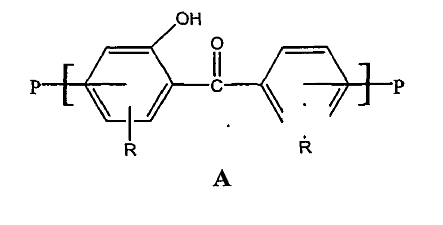 or a repeating moiety capable of undergoing re-arrangement to the above moiety. An example of such a repeating moiety is moiety B below:

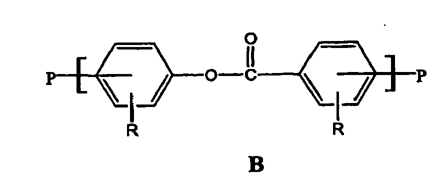

An example of a particularly preferred class of polymers for use in the present invention containing repeating B moieties (and/or repeating A moieties following photo-Fries rearrangement) are the so-called polyarylates.

Generally speaking, polyarylates are very well known in the art and are obtained by polymerization of a diphenol and a dicarboxylic acid. Polyarylates suitable for use in the articles of the instant invention include those described in U.S. 4,598,130, incorporated herein by reference. As described in U.S. 4,598,130, and for purposes of illustration and not by way of limitation, suitable dihydric phenols that can be employed to prepare the polyarylates are bisphenols such as bis(4-hydroxyphenyl) methane, 2,2-bis(4-hydroxyphenyl)propane (bisphenol-A), 2,2-bis(4-hydroxy-3-methylphenyl) propane, 4,4-bis(4-hydroxyphenyl) heptane, 2,2-bis(4-hydroxy-3,5-dichlorophenyl) propane, 2,2-bis(4-hydroxy-3,5-dibromophenyl) propane, etc.; dihydric phenol ethers such as bis(4-hydroxyphenyl) ether, bis(3,5-dichloro-4-hydroxyphenyl) ether, etc.; dihydroxydiphenyls such as p,p'-dihydroxydiphenyl, 3,3'-dichloro-4,4'-dihydroxydiphenyl, etc.; dihydroxyaryl sulfones such as bis(4-hydroxyphenyl) sulfone, bis(3,5-dimethyl-4-hydroxyphenyl)sulfone, etc.; dihydroxy benzenes, resorcinol, hydroquinone, halo- and alkyl-substituted dihydroxy benzenes such as 1,4-dihydroxy-2,5-dichlorobenzene, 1,4-dihydroxy-3-methylbenzene, etc.; and dihydroxy diphenyl sulfoxides such as bis(4-hydroxyphenyl) sulfoxide, bis(3,5-dibromo-4-hydroxyphenyl) sulfoxide, etc. A variety of additional dihydric phenols are also available such as are disclosed in U.S. Pat. Nos. 2,999,835; 3,028,365 and 3,153,008. Also suitable are copolymers prepared from the above dihydric phenols copolymerized with halogen-containing dihydric phenols such as 2,2-bis(3,5-dichloro-4-hydroxyphenyl) propane, 2,2-bis(3,5-dibromo-4-hydroxyphenyl) propane, etc. It is also possible to employ two or more different dihydric phenols or a copolymer of a dihydric phenol with a glycol or with hydroxy or acid terminated polyester, or with a dibasic acid as well as blends of any of the above materials. Suitable dicarboxylic acids are the aromatic and aliphatic aromatic dicarboxylic acids such as phthalic, isophthalic, terephthalic, o-phthalic, o-, m-, and p-phenylenediacetic acid; the polynuclear aromatic acids such as diphenic acid, and 1,4-naphthalic acid.

One of the most widely used commercial polyarylates results from the polymerization of bisphenol A (2,2-bis-(4-hydroxyphenyl)propane) and a 50:50 mixture iso/terephthalic acids. This polyarylate, which is particularly preferred for use in the sheeting material of the present invention, was previously commercially available under the tradename "Ardel D100" from Amoco Performance Polymers, Inc. and is now sold by Unitika America Corporation and its distributors under the tradename "U-Polymer U-100". The preferred polyarylate used in the present invention has the following formulas I and II below. Formula I is the polyarylate prior to photo-Fries rearrangement. Formula II is the polyarylate following photo-Fries rearrangement. One or both polymers may be present in the sheeting material:

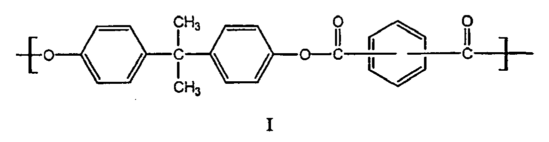

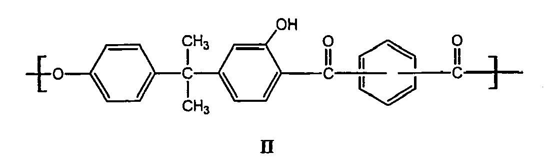

Another suitable group of polyarylates are those based on tetramethyl bisphenol-A, 4,4'-dihydroxybenzophenone, and 5-tertiary-butyl isophthalic acid dichloride, as generally disclosed in Wright, et al., Journal of Membrane Science, vol. 124, pp. 161-174 (1997), and other polyarylate structures disclosed therein.

A discussion of the structure and preparation of polyarylates may be found in the chapter entitled "History of Polyarylates" by L. Robeson and J. Tibbet (at page 95 of the treatise High Performance Polymers: Their Origin and Development, E. B. Seymour and G. S. Kirshenbaum, editors (1986)). Known processes for the production of a polyarylate include, for example, interfacial polymerization by mixing a solution of an aromatic dicarboxylic acid dihalide in an organic solvent with an alkaline aqueous solution of a bisphenol under stirring to react these materials; solution polymerization by reacting an aromatic dicarboxylic acid dihalide with a bisphenol in the presence of a deacidifying agent such as pyridine in an organic solvent; molten polymerization by reacting an aromatic dicarboxylic acid diphenyl ester with a bisphenol; molten polymerization by reacting an aromatic dicarboxylic acid, diphenyl carbonate and a bisphenol; molten polymerization by reacting an aromatic dicarboxylic acid with a bisphenol diacetate; and polymerization by reacting an aromatic dicarboxylic acid with a bisphenol diacetate. Methods for preparation of polyarylates may be referenced in further detail in Hirose, et al. U.S. 5,034,502 and Berger et al. U.S. 4,374,239, both incorporated herein by reference.

It is well known that, upon exposure to ultraviolet light, polyarylates undergo the photo-Fries rearrangement. See, Korshak et al., in "Synthesis and Properties of Self-Protecting Polyarylates," Journal of Polymer Science, Part A-1, Vol. 7, pages 157 to 172 (1969), which describes a mechanism to explain what happens when polyarylates are exposed to U.V. light. The authors propose that polyarylates undergo the photo-Fries rearrangement resulting in carbonyl and hydroxyl groups ortho to one another, structurally similar to o-hydroxybenzophenones which are known light absorbers. The o-hydroxybenzophenones which are part of the polyarylate polymer backbone can absorb greater than 95% U.V. light at wavelengths below 375 nm, and substantial amounts of U.V. light between 375 and 410 nm wavelength light. We have now found that when these moieties are within the polymeric backbone of the fluorescent layer, they provide greater durability for those fluorescent colorants than when the benzophenones are present merely as additives to the polymeric resin matrix.

It should be understood that while the above described polyarylate is a preferred U.V. light absorbing polymer for use in the present invention, any polymer which contains moiety A or B, above, is contemplated for use in the invention provided the polymer has properties which make it suitable for use in the particular product application under consideration. A further example of such a polymer is the block copolyestercarbonates described in International Patent Application WO 00/26275 (published May 11, 2000), incorporated by reference herein. The copolyestercarbonates described in the '275 application comprise organic carbonate blocks alternating with arylate blocks, where the arylate blocks are derived from a 1,3-dihydroxybenzene moiety and an aromatic dicarboxylic acid. Specifically the block copolyester-carbonate polymer having a moiety A and/or a moiety B as defined above has one or both of the structures III and IV below, respectively: 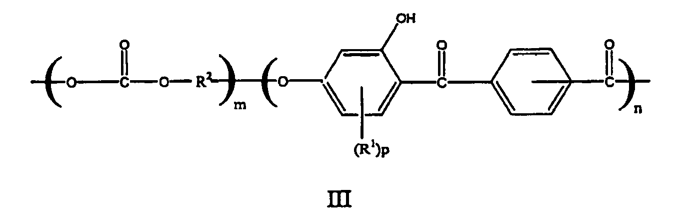 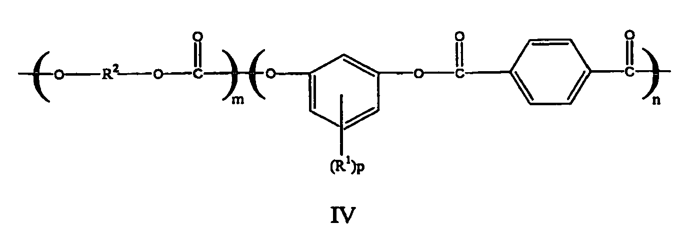 wherein each R¹ is independently H or C₁-C₁₂ alkyl, p is 0-3, each R² is independently a divalent organic radical; m is at least 1, and preferably about 2-200; and n is at least about 4, and preferably about 30-150.

The applicant in the above mentioned '275 application posits that the weatherability of the above copolyestercarbonates is attributable, at least in part, to the occurrence of thermally or photochemically induced photo-Fries rearrangement of arylate blocks (see structure IV above) to yield o-hydroxybenzophenone moieties (see structure III above) or analogs thereof which serve as absorbers ofU.V. radiation.

Additional polymers capable of undergoing rearrangement to U.V. light absorbent polymers are described in Cohen et al in "Transparent Ultraviolet-Barrier Coatings," Journal of Polymer Science, Part A-1, Vol. 9, pages 3263 to 3299 (1971) (incorporated by reference) which describes a number of phenyl polyesters, including polyarylates, which were synthesized to furnish molecules whose backbones rearrange under U.V. light to an o-hydroxybenzophenone structure.

The U.V. absorbing properties of the U.V. absorbing polymer need not result from a photo-Fries rearrangement. For example, as explained in the above-mentioned '275 application, synthesis and polymerization of suitable hydroxybenzophenone type monomers can result in polymers in which the U.V. light absorbing moiety A (see above) is already present in the polymer without need for the polymer to undergo photo-Fries rearrangement.

It should be understood that in the case where a polyarylate is used in the present invention, the U.V. light absorbing properties of the polyarylate will take some time to "develop" in the presence of U.V. radiation, with the time for "development" depending upon the environment and the intensity of the U.V. radiation. For example, in a Xenon Arc Weather-O-Meter, polyarylate typically takes about 50 hours to "develop." In view of this "development" period, it may be desired, although not required, to include a small quantity ofU.V. light absorbing compounds or light stabilizers in or in front of the fluorescent layer to provide some initial protection in the period before the U.V. light absorbing polymer has acquired its full protective capability.

While the polymeric resin used to fabricate a U.V. light resistant fluorescent retroreflective sheeting material may consist entirely of the U.V. absorbing polymers described above containing a moiety A and/or B, it is also contemplated herein to use blends of the U.V. absorbing polymer with other suitable polymers that may or may not have a U.V. absorbing moiety in the polymeric backbone. For example, blends of polyarylate with polymers selected from the group consisting of poly(ethylene terephthalate) ("PET"); poly (cyclohexanedimethanol-co-ethylene terephthalate) ("PETG"); polycarbonate; and poly (cyclohexanedimethanol terephthalate) ("PCT") can be used. Reference may be had to Robeson et al. U.S. Patent Nos. 4,286,075 and 4,259,458 (incorporated herein by reference) for a more detailed discussion of some of the foregoing polyarylate blends. Particularly preferred are blends of polyarylate and either polycarbonate or poly(ethylene terephthalate).

Methods for fabricating thermoplastic sheets from polyarylate and polyarylate blends, and for laminating these sheets to other polymeric layers are well known in the art. See for example Robeson et al. U.S. 4,643,937. The polymeric films which are used within this process may be fabricated in a known manner, for example using an extrusion methodology.

Preferably, the U.V. resistant sheeting material of the present invention is provided with a plurality of microprism retroreflective elements which may be formed directly onto a surface of the sheeting material in a known manner. For example, Pricone et al. U.S. Patent No. 4,601,861 discloses an improved method and apparatus for continuously embossing a repeating pattern of precise detail, in particular, cube-comer type retroreflector elements, on one surface of a single sheet or on one surface of a laminate of transparent thermoplastic materials, to form retroreflective sheeting. Pricone et al. discloses a continuous embossing tool in the form of a flexible thin metal belt or cylinder having on its outer surface an embossing pattern which is the reverse of the precision optical pattern to be formed. The embossing tool is continuously moved at a predetermined speed along a closed course through a heating station where the temperature of a portion of the embossing tool is raised above the glass transition temperature of the sheeting or laminate, and a cooling station where the heated portion of the embossing tool is cooled, while in a relatively planar condition, to below that glass transition temperature. The sheeting is continuously moved at the predetermined speed from a supply thereof into engagement with the embossing pattern on the tool and is pressed thereagainst continuously at a plurality of pressure points sequentially spaced along the heating station, with the one surface of the sheeting confronting and engaging the embossing pattern until the sheeting is raised above its glass transition temperature and conforms to the embossing pattern on the one face. The sheeting is maintained in engagement with the tool until the tool passes through the cooling station and the sheeting is lowered below its glass transition temperature and the pattern solidifies. The sheeting thereafter is stripped from the tool. Further details of the foregoing methodology are described in Pricone et al. which is incorporated herein by reference.

It is well known that many colorants, particularly fluorescent colorants, are highly susceptible to U.V. degradation. The fluorescent retroreflective sheeting material of the present invention, insofar as it provides a remarkably stable environment against U.V. weathering, contemplates incorporation of one or more U.V. sensitive fluorescent colorants/dyes or combination thereof, including known such dyes and dye combinations. The invention is not limited to any particular dye or colorant. Examples of suitable dyes are any of the fluorescent dyes which are known in the art for enhanced daytime and nighttime visibility of road signs. Examples of such dyes are the perylene, perylene imide, perylene ester, thioxanthene, thioxanthone, and thioindigoid compounds. Other dyes that may be suitable include the benzoxanthene, benzothiazine, napthalimide, and coumarin compounds. Blends of the foregoing dyes are also contemplated. As will be apparent to those skilled in the art, when the instant invention is embodied in the form of retroreflective sheeting, the dyes used will be sufficiently transparent such that the retroreflective function of the sheeting will not be significantly impaired.

Further examples of specific fluorescent dyes suitable for incorporation into fluorescent articles of the invention include the perylene ester and perylene imide dyes such as Lumogen F Orange 240, Lumogen F Yellow 083, and Lumogen F Red 300 (all available from BASF, Rensselaer, New York); thioxanthene dyes, such as Hostasol Yellow 3G Solvent Yellow 98 (available from Clariant Corporation, Charlotte, North Carolina) and Marigold Orange D-315 (Day-Glo Color Corporation, Cleveland, Ohio); thioxanthone dyes such as Hostasol Red GG (Clariant); thioindigoid dyes such as Hostasol Red 5B (Clariant); coumarin based dyes such as Macrolex 10 GN (Bayer Corporation) and Potomac Yellow D-838 (Day-Glo); benzoxanthene dyes such as Lumofast Yellow 3G (Day-Glo); and benzothiazine dyes such as Huron Yellow D-417 (Day-Glo).

In addition to the fluorescent dyes, non-fluorescent colorants may also be used to adjust the color of the final product.

The amount of fluorescent dye used in the fluorescent retroreflective sheeting material of the invention is dependent upon the type of dye, typically in the range of about 0.05 to about 1.5 percent, preferably in the range of 0.08 to 1.0 percent based on the total weight of the resin formulation used to fabricate a fluorescent article such as fluorescent sheeting material. In some cases, the loading of fluorescent dyes depends on the gauge of the fluorescent layer of the sheeting material and can be determined in accordance with the skill in the art.

To further enhance the fluorescent durability of retroreflective sheeting material of the invention, the fluorescent layer of the invention may optionally contain any of the well known ultraviolet absorbers (UVA's) and hindered amine light stabilizers (HALS); such UVA's and HALS also could be included in an optional cap layer or over-laminate layer. The present invention, however, makes it possible to substantially reduce or eliminate such additives, in either the fluorescent layer or in a cap layer or over-laminate.

Examples ofU.V. light absorbers suitable for use in the instant invention include the benzophenones, benzotriazoles, and oxalanilides. Examples of commercially available benzophenones include 2-hydroxy-4-n-octoxybenzophenone commercially available from Great Lakes Chemical Corporation under the trade name "Lowilite 22," 2,2-dihydroxy-4,4-dimethoxybenzophenone available under the trade name "Uvinul 3049" from BASF; and 2,2',2,4'-tetrahydroxybenzophenone available under the trade name "Uvinul 3050" from BASF. Examples of suitable benzotriazoles include 2-(2H-benzotriazol-2-yl)-4,6 bis(1-methyl-1-phenylethyl) phenol, sold under the trade name "Tinuvin 234" by Ciba-Geigy; and 2-(4,6-diphenyl-1,3,5-triazine-2-yl)-5(hexyl)oxyphenol sold commercially by Ciba-Geigy as "Tinuvin 1577". An example of an oxalanilide U.V. absorber is 2-ethyl,2'-ethoxy-oxalanilide sold under the trade name "Sanduvor VSU" by Clariant. Individuals skilled in the art will recognize that many other suitable benzophenone, benzotriazole, and oxalanilide U.V. light absorbers exist and may be suitable for use in the present invention.

The amount of U.V. light absorber suitable for use in the fluorescent layer of the invention is in the range of about 0.2 to about 4 percent, and preferably in the range of about 0.3 to about 2.0 percent based on the total weight of the fluorescent layer.

We believe it may be advantageous to use oligomeric and/or polymeric HALS in the present invention either alone or in conjunction with U.V. light absorbers. Examples of suitable HALS include: dimethyl succinate polymer with 4-hydroxy-2,2,6,6-tetramethyl-1-piperidineethanol commercially available from Ciba Specialty Additives as "Tinuvin 622"; poly[[6-[(1,1,3,3,-tetramethyl butyl) amino]-s-triazine-2,4-diyl] [[(2,2,6,6,-tetramethyl-4-piperidyl) imino] hexamethylene [(2,2,6,6-tetramethyl-4-piperidyl) imino]] commercially available from Ciba Specialty Additives under the trade name Chimassorb 944; "Tinuvin 791" which is available from Ciba Specialty Additives and is a blend of poly[[6-[1,1,3,3,-tetramethyl butyl) amino]-s-triazine-2,4-diyl][[(2,2,6,6,-tetramethyl-4-piperidyl) imino] hexamethylene [(2,2,6,6-tetramethyl-4-piperidyl)] imino]] and bis(2,2,6,6-tetramethyl-4-piperidynyl) sebacate; and "Hostavin N30" available from Clariant. Those skilled in the art will recognize that many other hindered amine light stabilizers may be used in the present invention.

The amount of HALS suitable for use in the fluorescent layer of the invention is in the range of about 0.2 to about 2 percent, and preferably in the range of about 0.3 to about 1.0 percent based on the total weight of the fluorescent layer formulation.

FIGS. 1-5 illustrate different embodiments of fluorescent retroreflective sheeting material in accordance with the instant invention in which a polymer matrix comprises a U.V. light absorbing polymer and a fluorescent colorant blended therein, and in which the retroreflective elements are either microprismatic cube corner elements (FIGS. 1-3) or glass microspheres (FIGS. 4-5).

FIG. 1 illustrates the simplest embodiment of a retroreflective sheeting article made in accordance with the instant invention, which is a monolayer structure having a layer 10 which is a polymer matrix comprising a U.V. light absorbing polymer and a fluorescent colorant blended therein, and having microprismatic retroreflective elements disposed on the rear surface of the layer.

FIG. 2 illustrates an alternative embodiment of a retroreflective sheeting article made in accordance with the instant invention having a layer 20 which is a polymer matrix comprising a U.V. light absorbing polymer and a fluorescent colorant blended therein disposed in laminar configuration over retroreflective layer 22. Such a construction may be desirable when one polymeric material may be preferred for use in the retroreflective layer, such as for its optical properties or its cube geometry retention properties, which may differ from those properties of layer 20. The structure of FIG. 2 allows the sheeting designer to choose materials for each of the layers that will optimize the properties of the entire finished sheeting structure for a particular intended purpose. Optional layer 23 can be either a tie layer or a laminating adhesive disposed between layers 20 and 22.

FIG. 3 illustrates an alternative embodiment of a retroreflective sheeting article made in accordance with the instant invention comprising a layer 30 which is a polymer matrix comprising a U.V. light absorbent polymer and a fluorescent colorant blended therein, disposed in laminar configuration over layer 32 having retroreflective elements disposed on the opposite surface thereof, and a cap layer or over-laminate film 34 disposed in laminar configuration over layer 30. Cap layer or over laminate film 34 may be selected to have properties desirable for the front surface of a sign, such as dew-resistance or ease of printing, which properties may not be optimum in the polymer matrix of layer 30. Optional layer 33 can be either a tie layer or a laminating adhesive disposed between layers 30 and 32.

The embodiments of FIGS. 1-3 are by way of illustration and not by way of limitation. For example, the optional tie layer or laminating adhesive 33 of FIG. 3 also could be used between layers 30 and 34. The cap layer or over-laminate layer of FIG. 3 could find utility in the structure of FIG. 1. Other variations will be apparent to those skilled in the art of retroreflective sheeting.

In another embodiment of the invention, one surface of one of the layers of the multi-layer embodiments can be pre-printed with a desired legend, so that the finished laminar structure has the desired legend on an inner surface thereof, such as disclosed in U.S. 5,213,872 and U.S. 5,310,436, both incorporated herein by reference in their entirety. For example, a layer having a legend pre-printed thereon may be disposed between layers 20 and 22 of FIG. 2, or a legend may be pre-printed on the top or bottom surface of layer 30 or the bottom surface of layer 34 of the embodiment of FIG. 3.

FIG. 4 illustrates how the present invention can be incorporated into an enclosed lens retroreflective sheeting article. Enclosed lens retroreflective sheeting is well-known in the art, having been taught as early as U.S. 2,407,680 (Palmquist) and comprising lenses such as glass microspheres embedded in a sheeting structure with a flat, transparent cover film. In the embodiment in FIG. 4, glass microspheres 41 are embedded in flat transparent cover film 40 comprising a U.V. light absorbing polymer and a fluorscent dye blended therein. Specularly reflective layer 45 may be vacuum deposited aluminum, as is well known in the art.

FIG. 5 illustrates how the present invention can be incorporated into an encapsulated lens retroreflective article. Encapsulated lens sheeting is also well known in the art, having been taught as early as U.S. 3,190,178 (McKenzie). Such sheeting comprises a binder layer in which a monolayer of lenses such as glass microspheres is partially embedded, and further comprises a cover film sealed to the binder layer such that the lenses are encapsulated within hermetically sealed cells. In the embodiment illustrated in FIG. 5, glass microspheres 51 are partially embedded in binder layer 52, and cover film 50 comprises a U.V. light absorbing polymer and a fluorescent dye blended therein.

Multi-layer embodiments of the glass bead sheeting of FIGS. 4, 5, such as are shown for microprismatic sheeting in FIGS. 1-3, will be apparent to those skilled in the art.

The U.V. light resistant fluorescent retroreflective sheeting material of the present invention is suitable for numerous applications in which the article will be exposed to outdoor weathering conditions.

The following examples are provided for purposes of illustration, only, and are not intended to limit the invention as defined in the appended claims.

### EXAMPLES

In each of the following examples, the fluorescent film formulations of the instant invention were of polyarylate (PAL), blends of polyarylate with polycarbonate (PAL/PC), and blends of polyarylate with poly(ethylene terephthalate) (PAL/PET). It will be understood, however, that the fluorescent formulations can be any transparent film containing polyarylate or a polymer with similar molecular structure to polyarylate, and blends thereof, which contain the U.V. light absorbing moieties A and/or B defined above. The polyarylate resin pellets used were "U-Polymer U-100", the PAL/PC blend pellets used were "U-Polymer P-5001 ", and the PAL1PET blend pellets used were "U-Polymer U-8400H", all available from Unitika, Japan. In comparative sample 1-1, the polycarbonate resin pellets used were Calibre-302 available from Dow Chemical Company. The fluorescent dye used in each sample was Hostasol Yellow 3G available from Clariant, present as 0.25 wt% in each sample. The film formulations were made using a C. W. Brabender Plasti-Corder Prep-Mixer (manufactured by C.W. Brabender Instruments, Inc. of Hackensack, NJ) through melt mixing of polymer resins and additives, followed by conversion into films of about 6 mils using a heated platen press. The mixing temperatures used were in the range of about 230-300 °C depending on the resins. The Brabender speed was 100 rpm and the mixing time used was in the range of about 3 to 6 minutes. Samples were prepared in 150 gram batches. Any exceptions to this sample preparation method will be noted in the specific examples.

Each sample was placed into a Xenon Arc accelerated "Weather-O-Meter" weathering unit. The test methodology used for the Xenon Arc weathering is outlined in ASTM G26-90, Section 1.3.1. Borosilicate inner and outer filters were used, and the irradiance level was set to 0.35 W/m² at 340 nm. Color measurements were taken routinely on a HunterLab LS-6000 colorimeter using a D65 light source, 2° observer, and a 0/45 geometric configuration. To determine the extent of fading and color shifts, the CIELAB ΔE* color difference was calculated to compare the initial color reading taken prior to accelerated weathering and the color reading after weathering for preselected durations of time. A small value for the CIE ΔE* color difference factor indicates small difference in color. A value of about 2 or 3 is barely detectable to the human eye.

### EXAMPLE 1

This example demonstrates the effectiveness of polyarylate and polyarylate blends as U.V. absorbing polymer matrices for a fluorescent dye relative to polycarbonate, without any U.V. absorbing additives or hindered amine light stabilizers.

**Table I**

| Accelerated Weathering Results of Fluorescence in Different Polymer Without UVA's or HALS | | | | |
|---|---|---|---|---|
| | | **ΔE* of Samples Exposed at Noted Period of Time (Hours)** | | |
| **Sample** | **Matrix** | 500 | 1000 | 1500 |
| 1-1 (comparison) | Polycarbonate | 8.24 | 26.07 | 44.26 |
| 1-2 | Polyarylate | 6.19 | 9.98 | 13.96 |
| 1-3 | PAL/PC | 4.14 | 4.31 | 5.78 |
| 1-4 | PAL/PET | 2.98 | 4.46 | 7.49 |

These results illustrate the effectiveness of polyarylate and polyarylate blends at protecting fluorescent color from U.V. light degradation as compared to polycarbonate. It is particularly surprising that the blends of PAL/PC and PAL/PET have superior fluorescent and color durability compared to pure polyarylate. Sample 1-1 was prepared through extrusion technique on a Killion 1/4" single-screw laboratory extruder.

### EXAMPLE 2

Example 2 demonstrates the improved fluorescent durability achieved by addition of a U.V. light absorber to polymeric films containing polyarylate ("PAL") blended with polycarbonate (PC) or polyethylene terephthalate (PET). Samples of PAL/PC and PAL/PET containing fluorescent dye were prepared as described in Example 1, except that the samples also included as a U.V. light absorber a benzotriazole-based compound sold by Ciba under the name Tinuvin 1577. Samples 2-1, 2-2 were loaded at 0.3 wt% and sample 2-3 was loaded at 3.0 wt%. The samples were weathered using the Xenon Arc accelerated Weather-O-Meter for the period noted. The results are shown in Table II.

**Table II**

| Accelerated Weathering Results of Fluorescence in PAL Blends with UVA | | | | |
|---|---|---|---|---|
| | | **ΔE* of Samples Exposed at Noted Period of Time (Hours)** | | |
| **Sample** | **Matrix** | 500 | 1000 | 1500 |
| 2-1 | PAL/PC/0.3% UV abs | 1.65 | 2.18 | 2.94 |
| 2-2 | PAL/PET/0.3% UV abs | 3.49 | 7.86 | 3.66 |
| 2-3 | PAL/PET/3.0% UV abs | 3.87 | 4.85 | 4.31 |

The results in Table II show that the U.V. absorber is effective in providing fluorescent durability in PAL/PC and PAL/PET blends. It is noteworthy that a 10-fold increase in U.V. absorber loading between sample 2-2 and 2-3 did not result in a significant change in ΔE* at 1500 hours of accelerated exposure.

### EXAMPLE 3

This example illustrates the effectiveness of combining a U.V. light absorber and HALS to provide durable fluorescence in PAL/PC and PAL/PET blends. The loading of U.V. light absorber (Tinuvin 1577) and HALS (Tinuvin 791) was 0.3 wt%, each. The results are shown in Table III.

**Table III**

| Accelerated Weathering Results of Fluorescence in PAL Blends with UVA and HALS Additives | | | | |
|---|---|---|---|---|
| | | **ΔE* of Samples Exposed at Noted Period of Time (Hours)** | | |
| **Sample** | **Matrix** | 500 | 1000 | 1500 |
| 3-1 | PAL/PC/UV/HALS | 2.38 | 2.44 | 3.75 |
| 3-2 | PAL/PET/UV/HALS | 2.71 | 2.60 | 1.58 |

The results demonstrate that the combination of UVA and HALS in PAL/PC and PAL/PET blends is remarkably effective in preventing the degradation of a fluorescent dye.

### EXAMPLE 4

This example illustrates that different HALS compounds in combination with a benzotriazole U.V. light absorbing additive provide increase fluorescent durability of fluorescent dyes in PAL/PET blends in accordance with the instant invention. Three HALS, namely, Tinuvin 791, Tinuvin 622, and Hostavin N30 (available from Clariant), each were blended in a PAL/PET matrix with the benzotriazole Tinuvin 1577 and Hostasol Yellow 3G dye. Each HALS and the UVA Tinuvin 1577 were loaded at 0.3 wt%. The accelerated weathering results are shown in Table IV. (Note that sample 4-2 below is also sample 3-2 in Example 3 above.)

**Table IV**

| Accelerated Weathering Results of Fluorescence in PAL/PET Blends with UVA and Different HALS Compounds | | | | | |
|---|---|---|---|---|---|
| **Sample** | **Matrix** | **Type of HALS** | **ΔE* of Samples Exposed at Noted Period of Time (Hours)** | | |
| | | | 500 | 1000 | 1500 |
| 4-1 | PAL/PET | T-622 | 2.0 | 4.53 | 5.43 |
| 4-2 | PAL/PET | T-791 | 2.71 | 2.60 | 1.58 |
| 4-3 | PAL/PET | N30 | 3.97 | 5.05 | 3.53 |

The results in Table IV illustrate that different HALS combined with UVA Tinuvin 1577 are effective in increasing the durability of Hostasol Yellow 3G fluorescent dye in PAL/PET blends in accordance with the instant invention.

The instant invention is intended to encompass any fluorescent article that can benefit from an ultraviolet absorbing polymer matrix of the claimed composition. Other fluorescent articles intended for long term outdoor use and provided with such a U.V.-absorbing polymer matrix are also intended to be within the scope of the invention. The invention also is not limited to the particular materials disclosed herein. Those skilled in the art will recognize that there are many polyarylate materials other than the specific materials disclosed herein that may be suitable for use in the instant invention. Some such materials may have backbone moiety structures which differ slightly from the backbone moiety structures disclosed herein. For purposes of the instant invention, what is important is that the polymer material comprise a polymer which either is, or is capable of undergoing rearrangement into, a U.V. light absorbing polymer material. Further, while the polymeric resins discussed herein have been thermoplastic resins, certain thermoset resins may also find utility in structures embodying the U.V. light absorbing polymer matrix of the instant invention. Similarly, other fluorescent dyes, U.V. light absorbers, and HALS compounds can also be used.

## Claims

1. A fluorescent retroreflective sheeting material composing : a fluorescent layer comprising a fluorescent dye in a polymeric resin matrix, the polymeric resin matrix comprising at least one polymeric resin, or mixture thereof, selected from the group consisting of:
(a) polymers having a polymeric backbone comprising the following repeating moiety A; 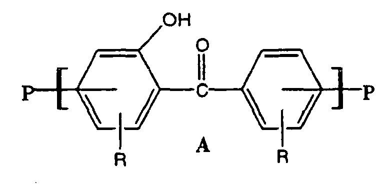 wherein R is a non-interfering substituent and P is the remainder of the polymer; and whereby the polymers are able to absorb ultraviolet light; and
(b) having a polymeric backbone comprising the following repeating moiety B: 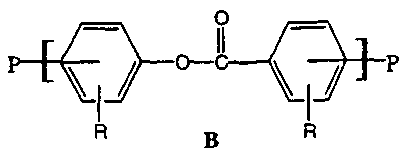
where R is a noninterfering substituent and P is the remainder of the polymer; said moiety B being transformable to said moiety A by photo-Fries rearrangement, whereby said polymer comprising moiety B can be transformed to an ultraviolet light absorbing polymer comprising moiety A; and a plurality of retroreflective elements.

2. The retroreflective sheeting material of claim 1 wherein the polymeric resin comprises a polyarylate, preferably wherein the polyarylate comprises one or both of the following repeating structures I and II:

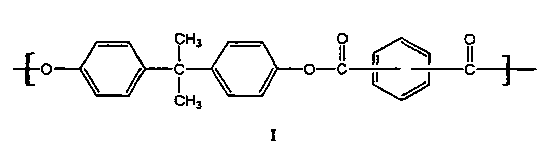

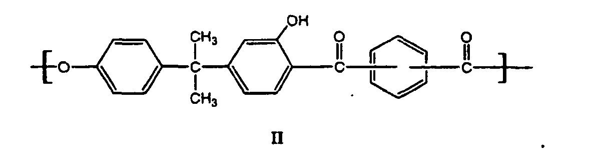

3. The retroreflective sheeting material of claim 1 or 2 wherein the polymeric resin comprises a blend of polyarylate and at least one additional polymer, preferably wherein said additional polymer is selected from the group consisting of polycarbonate, poly(ethylene terephthalate), poly(cyclohexanedimethanol terephthalate), and poly(cyclohexanedimethanol-co-ethylene terephthalate).

4. The retroreflective sheeting material of claim 3 wherein the additional polymer comprises poly(ethylene terephthalate) or polycarbonate.

5. The retroreflective sheeting material of any one of claims 1 to 4 wherein said at least one polymer resin comprises a block copolyestercarbonate having arylate blocks and carbonate blocks, preferably wherein the block copolyestercarbonate comprises one or both of the following repeating units: 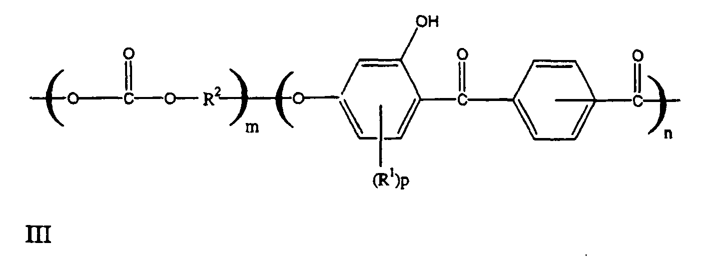 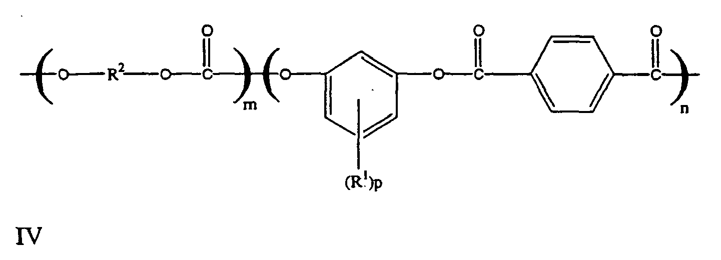 wherein each R¹ is independently H or C₁-C₁₂ alkyl, p is 0-3, each R² is independently a divalent organic radical; m is about 2-200; and n is about 30-150.

6. The retroreflective sheeting material of any one of claims 1 to 5 wherein the fluorescent dye comprises a dye selected from the group consisting of perylene dyes, perylene ester dyes, perylene imide dyes, thioxanthone dyes, thioindigoid dyes, thioxanthene dyes, benzoxanthene dyes, benzothiazine dyes, naphthalimide dyes, coumarin dyes, and mixtures thereof.

7. The retroreflective sheeting material of claim 6 wherein the fluorescent dye comprises a thioxanthene dye, preferably wherein the thioxanthene dye comprises Solvent Yellow 98.

8. The retroreflective sheeting material of claim 6 wherein the fluorescent dye comprises a perylene, perylene imide, or perylene ester dye, preferably wherein the fluorescent dye comprises any one or more of Lumogen F Yellow 083, Lumogen F Yellow 240, and Lumogen F Red 300.

9. The retroreflective sheeting material of claim 6 wherein the fluorescent dye comprises a benzoxanthene dye.

10. The retroreflective sheeting material of claim 6 wherein the fluorescent dye comprises a benzothiazine dye.

11. The retroreflective sheeting material of any one of claims 1 to 10 wherein said polymeric resin matrix further comprises one or more additives selected from the group consisting of U.V. light absorbing additives and hindered amine light stabilizing additives, said one or more additives being present as an admixture in said polymeric resin matrix.

12. The retroreflective sheeting material of any one of claims 1 to 11, wherein the plurality of retroreflective elements is selected from the group consisting of microprismatic cube corners and glass microspheres, preferably wherein said retroreflective elements are microprismatic cube corners.

13. The retroreflective sheeting material of claim 12 wherein said retroreflective elements are microprismatic cube corners on a surface of said fluorescent layer.

14. The retroreflective sheeting material of any one of claims 1 to 13 further comprising a second layer of a light transmissive polymeric material, with the fluorescent layer being disposed in laminar configuration over one surface of said second layer and said retroreflective elements being microprismatic cube corners on the opposite surface of said second layer.

15. The retroreflective sheeting material of any one of claims 12 to 14 wherein said retroreflective elements comprise glass microspheres in an enclosed lens configuration or in an encapsulated lens configuration.

16. The retroreflective sheeting material of any one of claims 1 to 15 further comprising a capping film or overlaminate film disposed in laminar configuration over said fluorescent layer.

17. The retroreflective sheeting material of any one of claims 1 to 16 wherein said polymeric resin absorbs substantial amounts of light in a substantial portion of the light spectrum between about 290-410 nm.

## Patentansprüche

1. Fluoreszierendes retroreflektives Folien- bzw. Bahnenmaterial, umfassend: eine fluoreszierende Schicht, umfassend einen fluoreszierenden Farbstoff in einer Polymerharzmatrix, wobei die Polymerharzmatrix mindestens ein polymeres Harz oder ein Gemisch davon umfaßt, ausgewählt aus der Gruppe, bestehend aus:
(a) Polymeren mit einem Polymerrückgrat, umfassend die folgende wiederkehrende Einheit A: 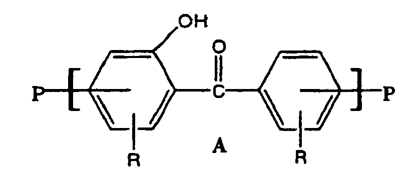 worin R ein nicht-störender Substituent ist und P der Rest des Polymers ist, und wobei die Polymere in der Lage sind, UV-Licht zu absorbieren, und
(b) mit einem Polymerrückgrat, umfassend die folgende wiederkehrende Einheit B: 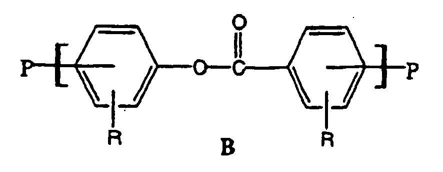 worin R ein nicht-störender Substituent ist und P der Rest des Polymers ist, wobei die Einheit B zu der Einheit A durch Photo-Fries-Umlagerung umwandelbar ist, wobei das Polymer, umfassend Einheit B, zu einem UV-Licht absorbierenden Polymer, umfassend Einheit A, umgewandelt werden kann, und eine Vielzahl von retroreflektiven Elementen.

2. Retroreflektives Bahnenmaterial gemäß Anspruch 1, wobei das Polymerharz ein Polyarylat umfaßt, wobei das Polyarylat vorzugsweise eine oder beide der folgenden wiederkehrenden Strukturen I und II umfaßt:

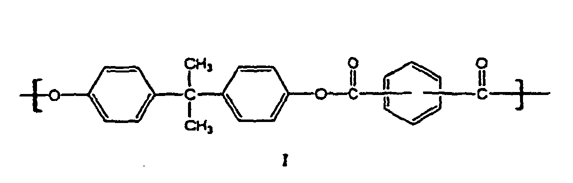

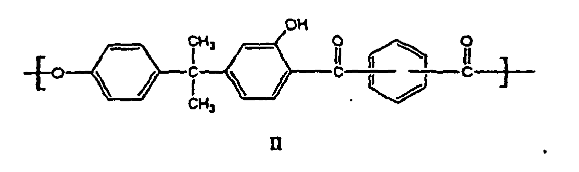

3. Retroreflektives Bahnenmaterial gemäß Anspruch 1 oder 2, wobei das Polymerharz einen Blend von Polyarylat und mindestens einem zusätzlichen Polymer umfaßt, wobei das zusätzliche Polymer vorzugsweise aus der Gruppe, bestehend aus Polycarbonat, Poly(ethylenterephthalat), Poly(cydohexandimethanolterephthalat) und Poly(cyclohexandimethanol-coethylenterephthalat), ausgewählt ist.

4. Retroreflektives Bahnenmaterial gemäß Anspruch 3, wobei das zusätzliche Polymer Poly(ethylenterephthalat) oder Polycarbonat umfaßt.

5. Retroreflektives Bahnenmaterial gemäß einem der Ansprüche 1 bis 4, wobei das mindestens eine Polymerharz einen Copolyestercarbonatblock mit Arylatblöcken und Carbonatblöcken umfaßt, wobei der Copolyestercarbonatblock vorzugsweise eine oder beide der folgenden wiederkehrenden Einheiten umfaßt: 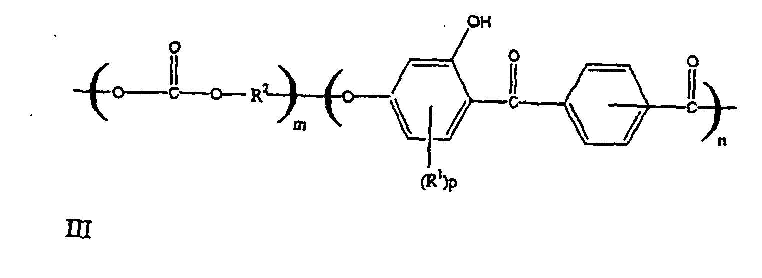 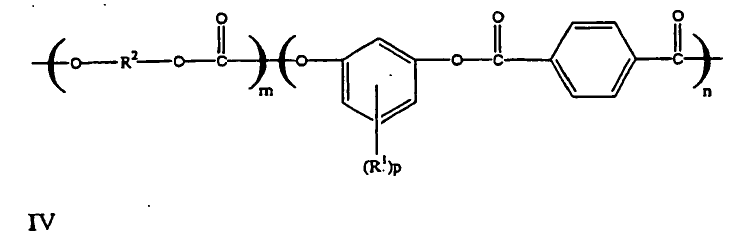 worin R¹ jeweils unabhängig voneinander H oder C₁-C₁₂ Alkyl ist, p 0-3 ist, R² jeweils unabhängig voneinander ein zweiwertiger organischer Rest ist, m etwa 2-200 ist, und n etwa 30-150 ist.

6. Retroreflektives Bahnenmaterial gemäß einem der Ansprüche 1 bis 5, wobei der fluoreszierende Farbstoff einen Farbstoff, ausgewählt aus der Gruppe, bestehend aus Perylenfarbstoffen, Perylenesterfarbstoffen, Perylenimidfarbstoffen, Thioxanthonfarbstoffen, Thioindigofarbstoffen, Thioxanthenfarbstoffen, Benzoxanthenfarbstoffen, Benzothiazinfarbstoffen, Naphthalimidfarbstoffen, Cumarinfarbstoffen und Gemischen davon, umfaßt.

7. Retroreflektives Bahnenmaterial gemäß Anspruch 6, wobei der fluoreszierende Farbstoff einen Thioxanthenfarbstoff umfaßt, wobei der Thioxanthenfarbstoff vorzugsweise Solvent Yellow 98 umfaßt.

8. Retroreflektives Bahnenmaterial gemäß Anspruch 6, wobei der fluoreszierende Farbstoff einen Perylen-, Perylenimid- oder Perylenesterfarbstoff umfaßt, wobei der fluoreszierende Farbstoff vorzugsweise einen oder mehrere von Lumogen F Yellow 083, Lumogen F Yellow 240 und Lumogen F Red 300 umfaßt.

9. Retroreflektives Bahnenmaterial gemäß Anspruch 6, wobei der fluoreszierende Farbstoff einen Benzoxanthenfarbstoff umfaßt.

10. Retroreflektives Bahnenmaterial gemäß Anspruch 6, wobei der fluoreszierende Farbstoff einen Benzothiazinfarbstoff umfaßt.

11. Retroreflektives Bahnenmaterial gemäß einem der Ansprüche 1 bis 10, wobei die Polymerharzmatrix weiter ein oder mehrere Additive, ausgewählt aus der Gruppe, bestehend aus UV-Licht absorbierenden Additiven und Licht stabilisierenden Additiven von gehinderten Aminen, umfaßt, wobei ein oder mehrere Additive als eine Zumischung in der Polymerharzmatrix vorliegen.

12. Retroreflektives Bahnenmaterial gemäß einem der Ansprüche 1 bis 11, wobei die Vielzahl an retroreflektiven Elementen aus der Gruppe, bestehend aus mikroprismatischen Würfelecken und Glasmikrokügelchen, ausgewählt ist, wobei die retroreflektiven Elemente vorzugsweise mikroprismatische Würfelekken sind.

13. Retroreflektives Bahnenmaterial gemäß Anspruch 12, wobei die retroreflektiven Elemente mikroprismatische Würfelecken auf einer Oberfläche der fluoreszierenden Schicht sind.

14. Retroreflektives Bahnenmaterial gemäß einem der Ansprüche 1 bis 13, weiter umfassend eine zweite Schicht eines lichtdurchlässigen Polymermaterials, wobei die fluoreszierende Schicht in laminarer Anordnung über einer Oberfläche der zweiten Schicht angeordnet ist, und die retroreflektiven Elemente mikroprismatische Würfelecken auf der entgegengesetzten Oberfläche der zweiten Schicht sind.

15. Retroreflektives Bahnenmaterial gemäß einem der Ansprüche 12 bis 14, wobei die retroreflektiven Elemente Glasmikrokügelchen in einer abgeschlossenen Linsenkonfiguration oder in einer eingekapselten Linsenkonfiguration umfassen.

16. Retroreflektives Bahnenmaterial gemäß einem der Ansprüche 1 bis 15, weiter umfassend einen Deckfilm oder darüber liegenden Laminatfilm, angeordnet in laminarer Konfiguration über der fluoreszierenden Schicht.

17. Retroreflektives Bahnenmaterial gemäß einem der Ansprüche 1 bis 16, wobei das Polymerharz wesentliche Mengen an Licht in einem wesentlichen Abschnitt des Lichtspektrums zwischen etwa 290-410 nm absorbiert.

## Revendications

1. Matière fluorescente pour films et feuilles rétroréfléchissants comprenant : une couche fluorescente comprenant un colorant fluorescent dans une matrice à base de résine polymère, la matrice à base de résine polymère comprenant au moins une résine polymère, ou un mélange de celle-ci, choisie dans l'ensemble constitué de :
(a) polymères ayant un squelette polymère comprenant le fragment répétitif A suivant : 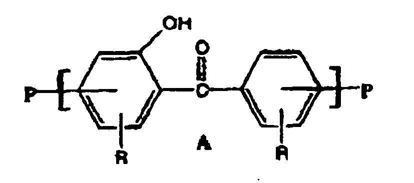 où R est un substituant non interférant et P est le reste du polymère ; et moyennant quoi les polymères sont capables d'absorber la lumière ultraviolette ; et
(b) ayant un squelette polymère comprenant le fragment répétitif B suivant : 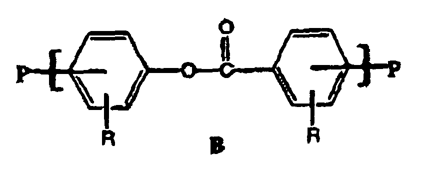
où R est un substituant non interférant et P est le reste du polymère ; ledit fragment B pouvant être transformé en ledit fragment A au moyen d'un photoréagencement de Fries, moyennant quoi le polymère comprenant le fragment B peut être transformé en un fragment A comprenant un polymère absorbant la lumière ultraviolette ; et une pluralité d'éléments rétroréfléchissants.

2. Matière pour films et feuilles rétroréfléchissants selon la revendication 1, dans laquelle la résine polymère comprend un polyarylate, de préférence dans laquelle le polyarylate comprend l'une des structures répétitives I et II suivantes ou les deux:

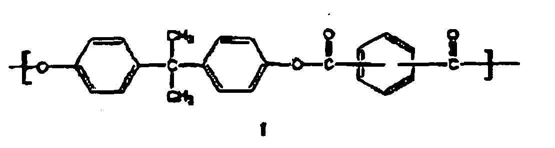

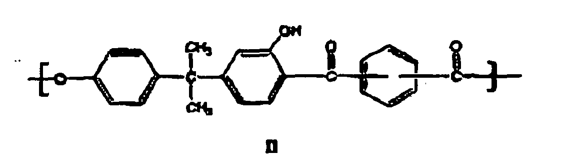

3. Matière pour films et feuilles rétroréfléchissants selon la revendication 1 ou 2, dans laquelle la résine polymère comprend un mélange de polyarylate et d'au moins un polymère supplémentaire, de préférence dans laquelle ledit polymère supplémentaire est choisi dans l'ensemble constitué de polycarbonate, poly(téréphtalate d'éthylène), poly(téréphtalate de cyclohexanediméthanol) et poly(cyclohexanediméthanol-co-téréphtalate d'éthylène).

4. Matière pour films et feuilles rétroréfléchissants selon la revendication 3, dans laquelle le polymère supplémentaire comprend du poly(téréphtalate d'éthylène) ou du polycarbonate.

5. Matière pour films et feuilles rétroréfléchissants selon l'une quelconque des revendications 1 à 4, dans laquelle ladite résine polymère, au nombre d'au moins une, comprend un copolyestercarbonate séquencé ayant des séquences arylate et des séquences carbonate, de préférence dans laquelle le copolyestercarbonate séquencé comprend l'une des unités répétitives suivantes ou les deux : 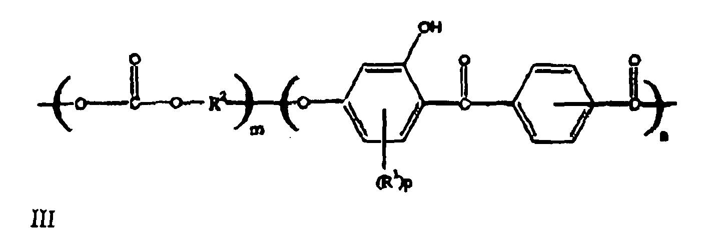 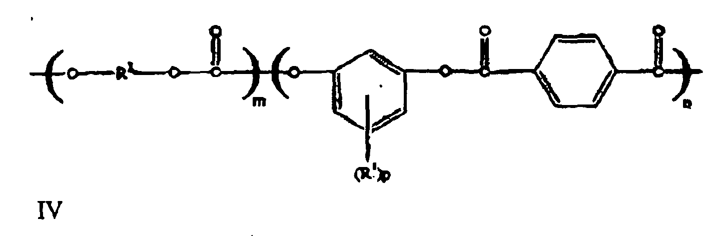 où chaque R¹ est indépendamment H ou un groupe alkyle en C₁ à C₁₂, p vaut de 0 à 3, chaque R² est indépendamment un radical organique divalent ; m vaut environ 2 à 200 ; et n vaut environ 30 à 150.

6. Matière pour films et feuilles rétroréfléchissants selon l'une quelconque des revendications 1 à 5, dans laquelle le colorant fluorescent comprend un colorant choisi dans l'ensemble constitué de colorants de type pérylène, de colorants de type ester de pérylène, de colorants de type imide de pérylène, de colorants de type thioxanthone, de colorants de type thioindigoïde, de colorants de type thioxanthène, de colorants de type benzoxanthène, de colorants de type benzothiazine, de colorants de type naphtalimide, de colorants de type coumarine et des mélanges de ceux-ci.

7. Matière pour films et feuilles rétroréfléchissants selon la revendication 6, dans laquelle le colorant fluorescent comprend un colorant de type thioxanthène, de préférence dans laquelle le colorant de type thioxanthène comprend du jaune solvant 98.

8. Matière pour films et feuilles rétroréfléchissants selon la revendication 6, dans laquelle le colorant fluorescent comprend un colorant de type pérylène, de type imide de pérylène ou de type ester de pérylène, de préférence dans laquelle le colorant fluorescent comprend l'un quelconque ou plusieurs de jaune Lumogen F 083, jaune Lumogen F 249 et rouge Lumogen F 300.

9. Matière pour films et feuilles rétroréfléchissants selon la revendication 6, dans laquelle le colorant fluorescent comprend un colorant de type benzoxanthène.

10. Matière pour films et feuilles rétroréfléchissants selon la revendication 6, dans laquelle le colorant fluorescent comprend un colorant de type benzothiazine.

11. Matière pour films et feuilles rétroréfléchissants selon l'une quelconque des revendications 1 à 10, dans laquelle ladite matrice à base de résine polymère comprend un ou plusieurs additifs choisis dans l'ensemble constitué d'additifs absorbant la lumière UV et d'additifs photo-stabilisants de type amine empêchée, ledit additif ou lesdits additifs étant présents sous la forme d'un mélange dans ladite matrice à base de résine polymère.

12. Matière pour films et feuilles rétroréfléchissants selon l'une quelconque des revendications 1 à 11, dans laquelle la pluralité d'éléments rétroréfléchissants est choisie dans l'ensemble constitué d'angles de cubes microprismatiques et de microsphères de verre, de préférence dans laquelle lesdits éléments rétroréfléchissants sont des angles de cubes microprismatiques.

13. Matière pour films et feuilles rétroréfléchissants selon la revendication 12, dans laquelle lesdits éléments rétroréfléchissants sont des angles de cubes microprismatiques sur une surface de ladite couche fluorescente.

14. Matière pour films et feuilles rétroréfléchissants selon l'une quelconque des revendications 1 à 13, comprenant en outre une seconde couche d'une matière polymère transmettant la lumière, la couche fluorescente étant disposée selon une configuration laminaire sur une surface de ladite seconde couche, et lesdits éléments rétroréfléchissants étant des angles de cubes microprismatiques sur la surface opposée de ladite seconde couche.

15. Matière pour films et feuilles rétroréfléchissants selon l'une quelconque des revendications 12 à 14, dans laquelle lesdits éléments rétroréfléchissants comprennent des microsphères de verre selon une configuration de lentille enfermée ou selon une configuration de lentille encapsulée.

16. Matière pour films et feuilles rétroréfléchissants selon l'une quelconque des revendications 1 à 15, comprenant en outre un film de recouvrement ou un film de surstratifié disposé selon une configuration laminaire sur ladite couche fluorescente.

17. Matière pour films et feuilles rétroréfléchissants selon l'une quelconque des revendications 1 à 16, dans laquelle ladite résine polymère absorbe des quantités substantielles de lumière dans une partie substantielle du spectre lumineux entre environ 290 et 410 nm.
